(19) Europäisches Patentamt / European Patent Office / Office européen des brevets

(11) **EP 3 434 015 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(21) Anmeldenummer: **17713284.2**

(22) Anmeldetag: **23.03.2017**

(51) Int Cl.:
*H04N 19/176* (2014.01)   *H04N 19/593* (2014.01)
*H04N 19/132* (2014.01)   *H04N 19/154* (2014.01)
*H04N 19/182* (2014.01)   *H04N 19/59* (2014.01)

(86) Internationale Anmeldenummer:
**PCT/EP2017/057011**

(87) Internationale Veröffentlichungsnummer:
**WO 2017/162835 (28.09.2017 Gazette 2017/39)**

(54) **DATENKOMPRESSION MITTELS ADAPTIVEN UNTERABTASTENS**

DATA COMPRESSION BY MEANS OF ADAPTIVE SUBSAMPLING

COMPRESSION DE DONNÉES PAR SOUS-ÉCHANTILLONNAGE ADAPTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2016 DE 102016003681**

(43) Veröffentlichungstag der Anmeldung:
**30.01.2019 Patentblatt 2019/05**

(73) Patentinhaber: **Universität Stuttgart**
**70174 Stuttgart (DE)**

(72) Erfinder:
• **WANG, Zhe**
  **71116 Gärtringen (DE)**
• **BAROUD, Yousef**
  **70619 Stuttgart (DE)**
• **NAJMABADI, Seyyed Mahdi**
  **70499 Stuttgart (DE)**
• **SIMON, Sven**
  **71638 Ludwigsburg (DE)**

(74) Vertreter: **Müller-Boré & Partner**
**Patentanwälte PartG mbB**
**Friedenheimer Brücke 21**
**80639 München (DE)**

(56) Entgegenhaltungen:
**US-A1- 2012 294 358**

• **BELFOR R A F ET AL: "Spatially adaptive subsampling of image sequences", IEEE TRANSACTIONS ON IMAGE PROCESSING, IEEE SERVICE CENTER, PISCATAWAY, NJ, US, Bd. 3, Nr. 5, 1. September 1994 (1994-09-01), Seiten 492-500, XP002534817, ISSN: 1057-7149, DOI: 10.1109/83.334991**
• **GARY J. SULLIVAN ET AL: "Overview of the High Efficiency Video Coding (HEVC) Standard", IEEE TRANSACTIONS ON CIRCUITS AND SYSTEMS FOR VIDEO TECHNOLOGY., Bd. 22, Nr. 12, 1. Dezember 2012 (2012-12-01), Seiten 1649-1668, XP055284729, US ISSN: 1051-8215, DOI: 10.1109/TCSVT.2012.2221191**
• **WANG Z ET AL: "SSPQ - spatial domain perceptual image codec based on subsampling and perceptual quantization", IMAGE PROCESSING (ICIP), 2012 19TH IEEE INTERNATIONAL CONFERENCE ON, IEEE, 30. September 2012 (2012-09-30), Seiten 1061-1064, XP032333358, DOI: 10.1109/ICIP.2012.6467046 ISBN: 978-1-4673-2534-9**
• **CHUN-HSIEN CHOU ET AL: "A perceptually tuned subband image coder based on the measure of just-noticeable-distortion profile", IEEE TRANSACTIONS ON CIRCUITS AND SYSTEMS FOR VIDEO TECHNOLOGY, IEEE SERVICE CENTER, PISCATAWAY, NJ, US, Bd. 5, Nr. 6, 1. Dezember 1995 (1995-12-01), Seiten 467-476, XP002395518, ISSN: 1051-8215, DOI: 10.1109/76.475889**

**Beschreibung**

Die vorliegende Erfindung betrifft ein Verfahren und eine Vorrichtung zur Datenkompression von Bilddaten mit geringen Verlusten in der wahrnehmbaren Bildqualität.

Vor allem durch die immer weitere Verbreitung digitaler Kamerasysteme mit immer höherem Auflösungsvermögen also immer größeren Bilddateien werden die Anforderungen an die Leistungsfähigkeit der Datenverarbeitungssystem insbesondere hinsichtlich Datenübertragungsrate und Speicherplatz ebenfalls immer größer. Eine Möglichkeit, auch immer größere Bilddatenmengen noch gut verarbeiten und archivieren zu können, ist die Verwendung von Datenkompressionsverfahren.

BELFOR ET AL: "Spatially adaptive subsampling of image sequences", IEEE TRANSACTIONS ON IMAGE PROCESSING, IEEE SERVICE CENTER, PISCATAWAY, NJ, US, Bd. 3, Nr. 5, 1. September 1994, Seiten 492-500 (XP002534817, ISSN: 1057-7149, DOI: 10.1109/83.334991), beschreibt die Anpassung eines Teilabtastgitters an den lokalen Raumfrequenzgehalt einer Bildfolge innerhalb eines räumlich adaptiven Teilabtastschemas.

US 2012/294358 A1 (SUZUKI TERUHIKO [JP] ET AL), 22. November 2012, beschreibt ein Bildverarbeitungssystem und -verfahren mit einer Ebenenannäherungseinheit, welche Pixelwerte eines zu verarbeitenden Blocks verwendet, um Parameter einer Funktion zu erhalten.

SULLIVAN ET AL: "Overview of the High Efficiency Video Coding (HEVC) Standard", IEEE TRANSACTIONS ON CIRCUITS AND SYSTEMS FOR VIDEO TECHNOLOGY., Bd. 22, Nr. 12, 1. Dezember 2012, Seiten 1649-1668 (XP055284729, US ISSN: 1051-8215, DOI: 10.1109/TCSVT.2012.2221191), beschreibt technische Merkmale des HEVC Standards.

WANG ET AL: "SSPQ - spatial domain perceptual image codec based on subsampling and perceptual quantization", IMAGE PROCESSING (ICIP), 2012 19TH IEEE INTERNATIONAL CONFERENCE ON IMAGE PROCESSING, IEEE, 30. September 2012, Seiten 1061-1064 (XP032333358, DOI: 10.1109/ICIP.2012.6467046; ISBN: 978-1-4673-2534-9); beschreibt einen räumlich domänenspezifischen, wahrnehmenden Bild-Codierer-Decodierer.

CHUN-HSIEN CHOU ET AL: "A perceptually tuned subband image coder based on the measure of just-noticeable-distortion profile", IEEE TRANSACTIONS ON CIRCUITS AND SYSTEMS FOR VIDEO TECHNOLOGY, IEEE SERVICE CENTER, PISCATAWAY, NJ, US, Bd. 5, Nr. 6, 1. Dezember 1995, Seiten 467-476 (XP002395518, ISSN: 1051-8215, DOI: 10.1109/76.475889), beschreibt ein Wahrnehmungsmodell zum Berechnen eines JND/MND-Profils von Grauwertbildern, wobei ein Teilbandkodierungsalgorithmus verwendet wird.

Die Kompression von Bilddaten beruht dabei darauf, die ursprünglichen Daten entweder in eine vollständig rekonstruierbare Form zu überführen, die weniger Speicherplatz benötigt (verlustfreie Kompression), oder Daten zu entfernen, deren Verlust nicht oder kaum wahrnehmbar ist (verlustbehaftete Kompression).

Bei der verlustfreien Kompression geht keine Information verloren. Die Daten werden lediglich so formatiert bzw. kodiert, dass sie in üblichen Speichersystemen weniger Platz einnehmen. Das heißt, es werden Redundanzen erkannt und entfernt. Etablierte Beispiele für verlustfreie Kompressionen sind die Grafikformate PNG und GIF. Anders als bei GIF wird bei PNG eine zusätzliche prädiktive Kodierung (bei PNG auch "Vorfilter" genannt) eingesetzt. Dabei werden aus Erfahrungswerten die nächsten Farbwerte vorhergesagt und nur die Abweichungen der Vorhersage von den wirklichen Bildinformationen gespeichert. Dies führt bei PNG oft zu einem besseren Kompressionsfaktor als bei GIF. Ein guter Kompressionsfaktor lässt sich oft aber nur erzielen, wenn die Bilder günstig für einen jeweiligen Kompressionsalgorithmus sind. Das bedeutet, sie sollten möglichst große Flächen mit jeweils gleicher Farbe oder gleichem Muster, bei PNG eventuell auch mit Farbverläufen, besitzen. Weitere verlustfreie Kompressionsverfahren sind beispielsweise Lossless JPEG, Lossless JPEG 2000 und JPEG-LS, die zum Teil sogar für komplexere Bilder noch recht gute Kompressionsraten erreichen.

Noch bessere Kompressionsraten lassen sich aber in der Regel mit der verlustbehafteten Kompression erreichen. Dabei wird ein Informationsverlust in Kauf genommen, der aber in der Darstellung des Bildes möglichst unauffällig ist. Beispielsweise kann man sich dabei zunutze machen, dass ausreichend kleine Farbänderungen für das menschliche Auge nicht erkennbar sind. Ähnlich wie bei der verlustbehafteten Audiokomprimierung basiert die Bildkomprimierung auf einem Modell der menschlichen Wahrnehmung. Anders als bei der verlustfreien Kompression werden bei der verlustbehafteten Kompression nicht nur informationstechnisch echt redundante Informationen, sondern auch solche, die lediglich über die Aufnahmefähigkeit der menschlichen Bildwahrnehmung hinausgehen, als Redundanzen betrachtet und im kodierten (komprimierten) Format möglichst entfernt. Welche Informationen damit aber als Redundanzen anzusehen sind, hängt vom Wahrnehmungsmodell ab. Im Gegensatz zur Audiokompression sind visuelle Wahrnehmungsmodelle aber nicht explizit und einheitlich formuliert und in die Algorithmen eingearbeitet, sondern mehr intuitiv bzw. subjektiv. Insbesondere können sie sich zwischen unterschiedlichen Kompressionsverfahren unterscheiden.

Beispiele für verlustbehaftete Datenkompression sind JPEG und JPEG 2000. Dabei erfolgt eine Transformation eines Quelldatensatzes (Bild) mit Hilfe eines Systems von Basisfunktionen. Bei JPEG ist das die Diskrete Kosinustransformation (DCT), bei JPEG 2000 die Wavelet-Transformation. Auf diese Weise erhält man eine andere, äquivalente Repräsentation des Bildes, die aus den Koeffizienten zu diesen Basisfunktionen besteht. Bei JPEG sind das die Amplituden der so genannten Ortsfrequenzen, bei JPEG 2000 eine Art von Mittelwerten über 4, 16, 64, ... Pixel. Diese Koeffizienten werden durch eine Quantisierung geändert. Kleine Koeffizienten verschwinden ganz und die größeren werden auf den nächstbesten Quantisierungswert gesetzt. So lassen sie sich mit weniger Bits darstellen. Schließlich wird oft noch eine verlustlose Datenkompression durchgeführt, um echte Redundanzen aus dem Resultat von Transformation und Quantisierung zu entfernen. Unabhängig vom möglichen Einsatz einer Transformation beim Kodieren, spielt eine Quantisierung bei vielen verlustbehafteten Datenkompressionen eine wichtige Rolle bei der Reduktion von Daten. Oft ist es möglich einen Quantisierungsfehler (also den Abstand der Quantisierungsstufen) direkt oder indirekt als Parameter einzustellen um damit die Kompressionsrate zu beeinflussen. Je größer der zugelassene Quantisierungsfehler, desto höher ist in der Regel auch die Kompressionsrate. Allerdings steigen damit auch die Datenverluste und es entstehen im rekonstruierten Datensatz (z.B. Bild) sichtbare Abweichungen (Artefakte) vom Originaldatensatz (z.B. Originalbild).

Ein anderes bekanntes Beispiel für Datenkompression stellt JPEG-LS dar. Dieses Verfahren ist beispielsweise in ISO/IEC 14495-1 als einer der neuesten Standards festgelegt und bietet sowohl einen verlustfreien als auch einen verlustbehafteten Modus. JPEG-LS bietet eine sehr gute Ausgewogenheit zwischen Komplexität des Algorithmus (also der Rechenzeit) und der Kompressionsrate, nicht zuletzt aufgrund des Umstandes, dass es anders als beipsielsweise JPEG oder JPEG 2000 nicht im transformierten Raum (engl. "transform domain"), sondern im Ortsraum (engl. "pixel domain") der Ausgangsdaten (z.B. Originalbild) operiert. Allerdings hat JPEG-LS durchaus Grenzen hinsichtlich der Kompressionsrate einerseits und dem Auftreten von sichtbaren Qualitätsverlusten (Artefakten) andererseits, die auch diesen Standard den älteren Standards JPEG und JPEG 2000 nicht uneingeschränkt überlegen erscheinen lässt. Insbesondere bei vergleichsweise homogenen Bildbereichen mit wenig Farb- und/oder Helligkeitsänderungen treten bei JPEG-LS oft merkliche Streifen als Artefakte auf.

Aufgabe der vorliegenden Erfindung ist es daher, die Kodierung und Dekodierung von Datensätzen für die visuelle Darstellung so zu verbessern, dass auch bei einer guten Kompressionsrate die insbesondere visuelle Erkennbarkeit von Datenverlusten gering gehalten bzw. reduziert wird.

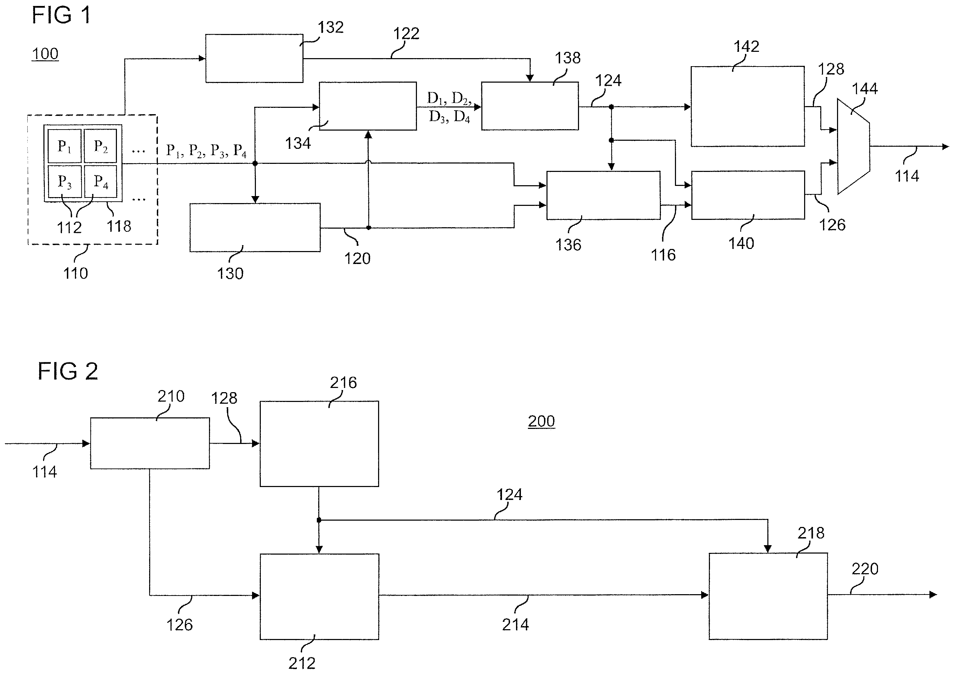

Diese Aufgabe wird durch ein Verfahren und ein System zum Kodieren mit den in den unabhängigen Ansprüchen angegebenen Merkmalen gelöst, welche auch in der Ausführungsform bezüglich der Abbildung 1 zu finden sind. Die restlichen Ausführungsformen sind als Beispiele zur Veranschaulichung zu betrachten, die nicht Gegenstand der vorliegenden Erfindung sind.

Somit betrifft die Erfindung in einem Aspekt insbesondere ein Verfahren zum Kodieren (Komprimieren) eines Ausgangsdatensatzes (Quelldatensatz). Dies kann beispielsweise ein unkomprimiertes (ursprüngliches) Bild sein. Insbesondere legt der Ausgangsdatensatz einen vorzugsweise mehrdimensionalen Datenraum fest, in welchem für jeden einer Vielzahl von Ausgangsdatenpunkten (z.B. Pixel, Voxel) jeweils ein Ausgangsdatenwert (z.B. Helligkeit und/oder Farbton) festgelegt ist. Die Erfindung ist dabei nicht auf die Anwendung für Fotos beschränkt. Auch andere Datensätze, welche beispielsweise gemessene Sensordaten für eine Temperaturverteilung (Thermografiedaten), eine elektrische und/oder magnetische Feldverteilung oder andere Messgrößen (z.B. Tomografiedaten) insbesondere zur visuellen Darstellung festlegen, können von der vorliegenden Erfindung profitieren. Dieser Ausgangsdatensatz wird durch das erfindungsgemäße Verfahren zur Erzeugung eines komprimierten Datensatzes kodiert.

Dabei umfasst das erfindungsgemäße Verfahren ein insbesondere verlustbehaftetes primäres Kodieren (Komprimieren) des Ausgangsdatensatzes zum Erzeugen eines Zwischendatensatzes und ein sekundäres Kodieren (Komprimieren) des Zwischendatensatzes zum Erzeugen des komprimierten Datensatzes.

Dabei umfasst das primäre Kodieren ein Festlegen einer Vielzahl von insbesondere nicht überlappenden Datenpunktblöcken, welche jeweils eine Vielzahl von Ausgangsdatenpunkten des Ausgangsdatensatzes umfassen. Vorzugsweise umfassen (zumindest abseits eines Randbereichs der Ausgangsdatenpunkte) die Datenpunktblöcke gleich viele Ausgangsdatenpunkte. Besonders bevorzugt weisen diese Datenpunktblöcke im Wesentlichen auch die gleiche Form auf. In einer bevorzugten Ausführungsform sind die Datenpunktblöcke rechteckig, insbesondere quadratisch, in dem Sinne, dass jeder Datenpunktblock $m$ x $n$ oder $n$ x $m$ bzw. $n$ x $n$ Ausgangsdatenpunkte (Pixel) umfasst, wobei $m$ eine natürlich Zahl ist und $n$ eine natürliche Zahl größer oder gleich 2 ist. Insbesondere quadratische Blöcke sind relativ einfach zu verarbeiten und vergleichsweise universell nutzbar. Insbesondere in speziellen Situation kann aber auch eine andere, beliebige Form bzw. Pixelzahl für jeden Datenpunktblock verwendet werden. Insbesondere könnte in besonderen Fällen ein Datenpunktblock sogar ein nicht zusammenhängendes Gebiet von Ausgangsdatenpunkte (Pixeln) festlegen.

Außerdem umfasst das primäre Kodieren ein Ermitteln eines (einzigen) Blockdatenwerts (als repräsentativen Wert) für jeden Datenpunktblock aus der Vielzahl von Ausgangsdatenwerten innerhalb des jeweiligen Datenpunktblockes. Vorzugsweise wird der Blockdatenwert auf Basis einer Funktion aller Ausgangsdatenwerte innerhalb des jeweiligen Datenpunktblocks ermittelt. Dabei wird vorzugsweise für alle (gleich großen) Datenpunktblöcke dieselbe Funktion angewandt. Beispielsweise wird als Blockdatenwert der (arithmetische) Mittelwert aller Ausgangsdatenwerte innerhalb des jeweiligen Datenpunktblocks ermittelt. In einer anderen bevorzugten Ausführungsform wird als Blockdatenwert der Median (Zentralwert) aller Ausgangsdatenwerte innerhalb des jeweiligen Datenpunktblocks ermittelt. Zumindest diese beiden Werte können einerseits mit wenig Rechenaufwand ermittelt werden und eignen sich andererseits auch sehr gut, um die (visuellen) Qualitätsverluste des Kodierverfahrens gering zu halten.

Das primäre Kodieren umfasst außerdem ein Überprüfen jedes Datenpunktblocks auf Einhaltung eines Toleranzkriteriums. Dabei wird insbesondere (direkt oder indirekt) überprüft, ob der ermittelte Blockdatenwert im Rahmen eines vorgegebenen Toleranzkriteriums ein ausreichend guter Repräsentant für alle Ausgangsdatenwerte im jeweiligen Datenpunktblock ist. Dazu können alle Ausgangsdatenwerte innerhalb eines Datenpunktblockes mit einem (jeweiligen) Referenzwert verglichen werden und es kann überprüft werden, ob eine Abweichung jedes Ausgangsdatenwertes vom (jeweiligen) Referenzwert unterhalb einer (jeweiligen) Schwelle, also innerhalb eines (jeweiligen) Toleranzwertes liegt. In einer bevorzugten Ausführungsform kann das Toleranzkriterium auf einer Wahrscheinlichkeitsfunktion basieren. Insbesondere kann das Toleranzkriterium z.B. mittels einer Fuzzy-Logic-Funktion implementiert werden.

Abhängig vom Resultat dieser Überprüfung umfasst das primäre Kodieren ein Generieren des Zwischendatensatzes derart, dass der Zwischendatensatz für jeden Datenpunktblock, in dem das Toleranzkriterium eingehalten ist, den Blockdatenwert als einzigen (repräsentativen) Datenwert enthält und für jeden Datenpunktblock, in dem das Toleranzkriterium nicht eingehalten ist, die einzelnen Ausgangsdatenwerte an den Ausgangsdatenpunkten des jeweiligen Datenpunktblockes enthält. Der Zwischendatensatz kann damit bereits deutlich kompakter (weniger Daten) sein als der Ausgangsdatensatz, da zumindest für diejenigen Datenpunktblöcke, in denen der Blockdatenwert ein ausreichend guter Repräsentant für den ganzen Datenpunktblock ist, die Datenmenge um das Verhältnis der Größe des Datenpunktblockes (Anzahl an Ausgangsdatenpunkten innerhalb des Datenpunktblockes) reduziert ist. Dabei ist die resultierende Kompressionsrate aber im Ortsraum (pixel domain) adaptiv und kann damit sehr effizient erkennbare Datenverluste (Artefakte) kontrollieren bzw. unterdrücken. Dazu wird das Toleranzkriterium (also insbesondere die zulässigen Abweichungen bzw. Verfälschungen) für die Überprüfung jedes Datenpunktblockes vorzugsweise anhand eines entsprechend gewünschten Wahrnehmungsmodells angepasst.

Im anschließenden sekundären Kodiervorgang werden vorzugsweise zumindest teilweise im Zwischendatensatz noch enthaltene Redundanzen entfernt. Nachdem bereits beim primären Kodieren eine deutliche Datenreduktion erreicht wird, können die Kriterien an den sekundären Kodiervorgang bezüglich eventueller weiterer Qualitätsverluste vergleichsweise streng gewählt werden. Das heißt selbst bei einem verlustlosen oder verlustarmen sekundären Kodieren wird insgesamt noch eine gute Kompressionsrate erreicht. Gerade wenn die Anforderungen an die Kompressionsrate nicht zu hoch ist (also die Datenreduktion gering ist) erreichen auch herkömmliche, verlustbehaftete Kodierverfahren oft eine recht hohe Qualität und die Neigung zur Bildung von erkennbaren Artefakten ist gering. Insbesondere bei einer JPEG-LS-Kodierung im verlustbehafteten Modus kann die Neigung zur Bildung von Artefakten durch entsprechend hohe Qualitätsanforderungen bei der Parameterwahl (z.B. der Wahl eines entsprechend niedrigen Quantisierungsfehlers) unterdrückt werden. Damit erreicht die vorliegende Erfindung eine Reduktion der insbesondere visuellen Erkennbarkeit von Datenverlusten auch bei einer guten Kompressionsrate.

Auch wenn es beispielsweise grundsätzlich möglich ist, einen globalen Toleranzwert festzulegen, der für alle Datenpunktblöcke und insbesondere für alle Ausgangsdatenpunkte bzw. Ausgangsdatenwerte gleichermaßen anzuwenden ist, was insbesondere zu einer sehr schnellen Kodierung führt, ist es zugunsten einer hohen Qualität und Kompressionsrate besonders bevorzugt, wenn das Überprüfen jedes Datenpunktblocks auf Einhaltung des Toleranzkriteriums ein Ermitteln eines Toleranzwertes für jeden Ausgangsdatenpunkt umfasst. Insbesondere wird dabei für jeden Ausgangsdatenpunkt ein eigener Toleranzwert (insbesondere in der Foto- bzw. Bildbearbeitung auch als "just-noticeable distortion" *JND* bezeichnet) ermittelt. Vorzugsweise wird dieser Toleranzwert für jeden Ausgangsdatenpunkt als Funktion der Ausgangsdatenwerte von benachbarten Ausgangsdatenpunkten ermittelt. So hängt die Wahrnehmbarkeit von Verfälschungen der Daten in einem Datenpunkt regemäßig von der Umgebung dieses Datenpunktes ab. Beispielsweise ist es besonders bevorzugt den Toleranzwert für jeden Ausgangsdatenpunkt in Abhängigkeit von den Ausgangsdatenwerten von vorzugsweise zumindest 8, noch mehr bevorzugt zumindest 24 benachbarten Ausgangsdatenpunkten (insbesondere den 8 bzw. 24 nächsten Nachbarn) zu ermitteln.

Ähnliche grundsätzliche Überlegungen zu umgebungsabhängigen Wahrnehmungsgrenzen, also *JND*-Werten, sind beispielsweise in [C.-H. Chou und Y.-C. Li, "A perceptually tuned subband image coder based on the measure of just-noticeable-distortion profile" IEEE Trans. Circuits Syst. Video Technol., vol. 5, no. 6, pp. 467-476, Dec. 1995], [X. Yang, W. Lin, Z. Lu, E. Ong, und S. Yao, "Just-noticeable-distortion profile with nonlinear additivity model for perceptual masking in color images", in Acoustics, Speech, and Signal Processing, 2003. Proceedings. (ICASSP '03). 2003 IEEE International Conference on, vol. 3, Apr. 2003, pp. III-609-12 vol. 3] und [A. Liu, W. Lin, M. Paul, C. Deng, und F. Zhang, "Just noticeable difference for images with decomposition model for separating edge and textured regions", IEEE Trans. Circuits Syst. Video Technol., vol. 20, no. 11, pp. 1648-1652, Nov. 2010] bereits angestellt worden und wurden im Zusammenhang mit der vorliegenden Erfindung als besonders vorteilhaft erkannt. Beispielsweise hat sich ein Toleranzwert

$$JND(i,j) = max\{f_1[bg(i,j), mg(i,j)], f_2[bg(i,j)]\} \qquad (1)$$

für einen Ausgangsdatenpunkt mit den Koordinaten $(i, j)$ und dem Ausgangsdatenwert $p(i,j)$ als sehr effizient herausgestellt, wobei die Funktionen $f_1$ und $f_2$ Modelle für einen Textur-Maskierungseffekt (engl. "texture masking effect") bzw. Helligkeits-Maskierungseffekt (engl. "luminance masking effect") insbesondere gemäß [C.-H. Chou und Y.-C. Li, "A perceptually tuned subband image coder based on the measure of just-noticeable-distortion profile" IEEE Trans. Circuits Syst. Video Technol., vol. 5, no. 6, pp. 467-476, Dec. 1995] beschreiben. Dabei gilt vorzugsweise:

$$bg(i,j) = \frac{1}{32}\sum_{m=1}^{5}\sum_{n=1}^{5}p(i-3+m, j-3+n)\cdot B(m,n) \qquad (2)$$

mit

$$B = \begin{pmatrix} 1 & 1 & 1 & 1 & 1 \\ 1 & 2 & 2 & 2 & 1 \\ 1 & 2 & 0 & 2 & 1 \\ 1 & 2 & 2 & 2 & 1 \\ 1 & 1 & 1 & 1 & 1 \end{pmatrix} \qquad (3)$$

und

$$mg(i,j) = \max_{k=1,2,3,4}|grad_k(i,j)| \qquad (4)$$

mit

$$grad_k(i,j) = \frac{1}{16}\sum_{m=1}^{5}\sum_{n=1}^{5}p(i-3+m, j-3+n)\cdot G_k(m,n) \qquad (5)$$

wobei

$$G_1 = \begin{pmatrix} 0 & 0 & 0 & 0 & 0 \\ 1 & 3 & 8 & 3 & 1 \\ 0 & 0 & 0 & 0 & 0 \\ -1 & -3 & -8 & -3 & -1 \\ 0 & 0 & 0 & 0 & 0 \end{pmatrix} \qquad (6a)$$

$$G_2 = \begin{pmatrix} 0 & 0 & 1 & 0 & 0 \\ 0 & 8 & 3 & 0 & 0 \\ 1 & 3 & 0 & -3 & -1 \\ 0 & 0 & -3 & -8 & 0 \\ 0 & 0 & -1 & 0 & 0 \end{pmatrix} \qquad (6b)$$

$$G_3 = \begin{pmatrix} 0 & 0 & 1 & 0 & 0 \\ 0 & 0 & 3 & 8 & 0 \\ -1 & -3 & 0 & 3 & 1 \\ 0 & -8 & -3 & 0 & 0 \\ 0 & 0 & -1 & 0 & 0 \end{pmatrix} \qquad (6c)$$

$$G_4 = \begin{pmatrix} 0 & 1 & 0 & -1 & 0 \\ 0 & 3 & 0 & -3 & 0 \\ 0 & 8 & 0 & -8 & 0 \\ 0 & 3 & 0 & -3 & 0 \\ 0 & 1 & 0 & -1 & 0 \end{pmatrix} \qquad (6d)$$

Darüber hinaus umfasst das Überprüfen jedes Datenpunktblocks auf Einhaltung des Toleranzkriteriums vorzugsweise ein Ermitteln (Berechnen oder Festlegen oder Definieren) eines Referenzwertes für jeden Ausgangsdatenpunkt zumindest in Abhängigkeit vom ermittelten Blockdatenwert zumindest des jeweiligen Datenpunktblocks.

In einer bevorzugten Ausführungsform wird dabei für jeden Datenpunktblock der Blockdatenwert als Referenzwert für jeden Ausgangsdatenpunkt innerhalb des jeweiligen Datenpunktblocks verwendet. Diese Art der Ermittlung des Referenzwertes ist sowohl hinsichtlich der Rechenzeit als auch hinsichtlich des Speicherbedarfs sehr effizient. So muss insbesondere dafür keine aufwändige Rechenoperation ausgeführt werden. Stattdessen stehen sämtliche Referenzwerte der Ausgangsdatenpunkte innerhalb eines Datenpunktblockes bereits mit der Ermittlung des Blockdatenwertes zur Verfügung. Außerdem ist es in diesem Fall nicht notwendig, für jeden Ausgangsdatenpunkt eigens einen Referenzwert zu speichern. Stattdessen kann für sämtliche Ausgangsdatenpunkte auf den einzigen (gemeinsamen) Referenzwert zurückgegriffen werden, welcher beispielsweise nur einmal gespeichert wird und auf welchen dann für jeden Ausgangsdatenpunkt verwiesen wird.

In einer anderen bevorzugten Ausführungsform wird für jeden Ausgangsdatenpunkt in einem Datenpunktblock ein eigener Referenzwert ermittelt. Dieser kann beispielsweise in Abhängigkeit von Blockdatenwerten benachbarter Datenpunktblöcke insbesondere durch Interpolation erfolgen. Es wird also gewissermaßen versucht, die ursprünglichen Ausgangsdatenwerte aus den Blockdatenwerten beispielsweise durch Interpolation (annähernd) zu rekonstruieren. Diese Vorgehensweise bei der Ermittlung der Referenzwerte ist zwar etwas rechenaufwändiger, kann aber im Einzelfall zu einer Verbesserung der Qualität und/oder der Kompressionsrate führen. Besonders bevorzugt wird im Falle der Ermittlung einzelner Referenzwerte für jeden Ausgangsdatenpunkt derselbe Algorithmus verwendet, wie er sich auch bei einer späteren Dekodierung zur Rekonstruktion der Werte an den einzelnen Datenpunkten besonders eignet. Es wird also vorzugsweise das erwartete Ergebnis einer späteren Dekodierung temporär antizipiert.

Basierend auf dem (entweder global oder lokal) ermittelten Toleranzwert und dem ermittelten Referenzwert umfasst das Überprüfen jedes Datenpunktblocks auf Einhaltung des Toleranzkriteriums vorzugsweise Überprüfen jedes Ausgangsdatenpunkts innerhalb des Datenpunktblock, ob eine Abweichung des zugehörigen Ausgangsdatenwerts vom jeweiligen Referenzwert innerhalb des jeweiligen Toleranzwerts liegt. Besonders bevorzugt gilt das Toleranzkriterium dann und nur dann als eingehalten, wenn die Abweichungen einer Mehrzahl von Ausgangsdatenwerten, noch mehr bevorzugt aller Ausgangsdatenwerte im jeweiligen Datenpunktblock innerhalb des jeweiligen Toleranzwerts liegen.

In einer weiteren bevorzugten Ausführungsform umfasst das Überprüfen jedes Datenpunktblocks auf Einhaltung eines Toleranzkriteriums ein Erzeugen eines Blockbewertungsdatensatzes, der für jeden Datenpunktblock festlegt, ob das Toleranzkriterium eingehalten wird oder nicht. Da der Blockbewertungsdatensatz vorzugsweise nicht mehr Information tragen muss als für jeden Datenpunktblock die binäre Aussage darüber, ob der jeweilige Datenpunktblock das Toleranzkriterium einhält oder nicht, muss der Blockbewertungsdatensatz vorzugsweise für jeden Datenpunktblock nur ein Bit zur Verfügung stellen und benötigt daher vergleichsweise wenig Speicherplatz bzw. wenig Übertragungskapazität. Der Blockbewertungsdatensatz kann daher mit nur wenig Speicherbedarf eine Zuordnung (ein Mapping) der Dateninhalte des Zwischendatensatzes zu den Ausgangsdatenpunkten festlegen. Diese Zuordnungsinformation muss somit nicht (explizit) im Zwischendatensatz enthalten sein.

Vorzugsweise umfasst dabei das sekundäre Kodieren (Komprimieren) des Zwischendatensatzes zum Erzeugen des komprimierten Datensatzes ein erstes sekundäres Kodieren des Zwischendatensatzes zur Erzeugung eines komprimierten Zwischendatensatzes, ein zweites sekundäres Kodieren des Blockbewertungsdatensatzes zur Erzeugung eines komprimierten Blockbewertungsdatensatzes und ein Multiplexen (bzw. Zusammenfassen bzw. Bündeln) des komprimierten Zwischendatensatzes mit dem komprimierten Blockbewertungsdatensatz zur Erzeugung des komprimierten Datensatzes. Eine derartige (temporäre) Trennung des Blockbewertungsdatensatzes vom Zwischendatensatz, wobei der Zwischendatensatz die tatsächlichen Datenwerte (Farbe, Helligkeit, Farbänderung oder dergleichen) direkt oder indirekt festlegt und der Blockbewertungsdatensatz eine Zuordnung der Datenwerte zu den Datenpunkten (Koordinaten, Pixel) definiert, ermöglicht es, dass auch das erste sekundäre Kodieren und das zweite sekundäre Kodieren als eigenständige Kodiervorgänge implementiert werden. Dies ist insbesondere dahingehend besonders vorteilhaft, dass die beiden sekundären Kodiervorgänge auf die unterschiedliche Datenstruktur des Zwischendatensatzes und des Blockbewertungsdatensatzes abgestimmt werden können, um jeweils eine möglichst gute Kompressionsrate zu erreichen. Beispielsweise ist es besonders bevorzugt, wenn das zweite sekundäre Kodieren verlustfrei erfolgt, um möglichst keine Informationen über die Zuordnung der Datenwerte zu den Datenpunkten zu verlieren. Andererseits kann das erste sekundäre Kodieren durchaus verlustbehaftet sein, und damit die Kompressionsrate verbessern.

In einer bevorzugten Ausführungsform umfasst das sekundäre Kodieren (insbesondere das erste sekundäre Kodieren) des Zwischendatensatzes ein verlustbehaftetes Komprimieren durch Quantisieren (von Datenwerten) mit einem lokalen Quantisierungsfehler, der für jeden Datenpunktblock in Abhängigkeit vom Blockbewertungsdatensatz ermittelt wird. Damit lassen sich sehr effizient Datenverluste adaptiv in Abhängigkeit vom zuvor festgelegten Toleranzkriterium steuern. Da bereits beim primären Kodieren eine sehr wirksame Datenreduktion stattgefunden hat, ist es nicht mehr erforderlich, beim sekundären Kodieren hohe Verluste (z.B. durch hohe Quantisierungsfehler) zuzulassen, um im Endeffekt auf eine gute Kompressionsrate zu kommen. Durch adaptives Quantisieren, also mit der lokalen Abhängigkeit vom Blockbewertungsdatensatz, können außerdem unerwünschte Aktefakte unterdrückt werden. Beispielsweise gerade die bei JPEG-LS oft störenden Quantisierungs-Artefakte in Bereichen nur geringer Farb- und/oder Helligkeitsänderungen können dadurch sehr effizient unterdrückt werden, dass solche Bereiche im Blockbewertungsdatensatz als nicht sensible Datenpunktblöcke (auch "non-*ROI*" bezeichnet) definiert werden, welche das Toleranzkriterium einhalten und sehr gut durch einen einzigen Blockdatenwert repräsentiert werden. Diese Information im Blockbewertungsdatensatz kann im (ersten) sekundären Kodierungsvorgang zur Ansteuerung des Quantisierungsparameters (Quantisierungsfehler) genutzt werden, um den Quantisierungsfehler dort gering zu halten oder sogar auszuschalten. Damit werden solche Bereiche vorzugsweise verlustfrei kodiert, während andere Bereiche, in denen die Quantisierung keine so deutlich erkennbaren Artefakte verursacht, zugunsten einer höheren Komprimierungsrate verlustbehaftet kodiert werden können.

Dieser Vorteil einer adaptiven Quantisierung kommt insbesondere bei sekundären Kodierungsverfahren zum Tragen, bei denen die Quantisierung für Datenwerte im Ortsraum ("pixel domain") erfolgt, weshalb zumindest in dieser Hinsicht für die (erste) sekundäre Kodierung "pixel domain"-Kodierungen den "transform domain"-Kodierungen vorzuziehen sind. Mögliche Beispiele für besonders bevorzugte Kodierer für die (erste) sekundäre Kodierung sind:

- JPEG-LS, publiziert als ISO-Standard und ITU-T-Empfehlung: ISO/IEC 14495-1:1999 ITU-T Rec. T.87, Juni 1998,
- LOCO-I, publiziert von M. J. Weinberger, G. Seroussi und G. Sapiro, "The LOCO-I lossless image compression algorithm: principles and standardization into JPEG-LS," in IEEE Transactions on Image Processing, vol. 9, no. 8, pp. 1309-1324, Aug 2000,
- CALIC, publiziert von X. Wu und N. Memon, "Context-based, adaptive, lossless image coding," in IEEE Transactions on Communications, vol. 45, no. 4, pp. 437-444, Apr 1997,
- FELICS, publiziert von P. G. Howard und J. S. Vitter, "Fast and efficient lossless image compression," Data Compression Conference, 1993. DCC '93., Snowbird, UT, 1993, pp. 351-360,
- PNG, publiziert als ISO-Standard: ISO/IEC 15948:2004, März 2004

In einem weiteren Aspekt betrifft die vorliegende Erfindung ein System zum Kodieren eines Ausgangsdatensatzes, in welchem für jeden einer Vielzahl von Ausgangsdatenpunkten jeweils ein Ausgangsdatenwert festgelegt ist, zur Erzeugung eines komprimierten Datensatzes, umfassend:

- einen primären Kodierer zum Kodieren des Ausgangsdatensatzes zum Erzeugen eines Zwischendatensatzes, umfassend:

    -- ein Blockerzeugungsmodul zum Festlegen einer Vielzahl von Datenpunktblöcken, welche jeweils eine Vielzahl von Ausgangsdatenpunkten des Ausgangsdatensatzes umfassen;
    -- ein Blockwertermittlungsmodul zum Ermitteln eines Blockdatenwerts für jeden Datenpunktblock aus der Vielzahl von Ausgangsdatenwerten innerhalb des jeweiligen Datenpunktblockes;
    -- ein Blocküberprüfungsmodul zum Überprüfen jedes Datenpunktblocks auf Einhaltung eines Toleranzkriteriums; und
    -- ein Kompositionsmodul zum Generieren des Zwischendatensatzes derart, dass der Zwischendatensatz für jeden Datenpunktblock, in dem das Toleranzkriterium eingehalten ist, den Blockdatenwert als einzigen Datenwert enthält und für jeden Datenpunktblock, in dem das Toleranzkriterium nicht eingehalten ist, die einzelnen Ausgangsdatenwerte an den Ausgangsdatenpunkten des jeweiligen Datenpunktblockes enthält; und

- einen sekundären Kodierer zum Kodieren des Zwischendatensatzes zum Erzeugen des komprimierten Datensatzes.

Sowohl der primäre Kodierer mit dem Blockerzeugungsmodul, dem Blockwertermittlungsmodul, dem Blocküberprüfungsmodul und dem Kompositionsmodul als auch der sekundäre Kodierer könne je nach Anwendungsbereich teilweise oder vollständig als Hardware-Komponenten oder als Software-Module implementiert sein.

Vorzugsweise ist das System ausgelegt, ein Verfahren zum Kodieren gemäß der vorliegenden Erfindung insbesondere in einer der hier beschriebenen bevorzugten Ausführungsformen auszuführen. Somit umfasst das Blocküberprüfungsmodul vorzugsweise ein Toleranzwertermittlungsmodul zum Ermitteln eines Toleranzwertes für jeden Ausgangsdatenpunkt. Außerdem umfasst das Blocküberprüfungsmodul besonders bevorzugt ein Referenzwertermittlungsmodul zum Ermitteln eines Referenzwertes für jeden Ausgangsdatenpunkt zumindest in Abhängigkeit vom ermittelten Blockdatenwert zumindest des jeweiligen Datenpunktblocks. In einer bevorzugten Ausführungsform umfasst das Blocküberprüfungsmodul außerdem ein Abweichungsermittlungsmodul zum Ermitteln von Abweichungen der Ausgangsdatenwerte vom jeweiligen Referenzwert. Außerdem umfasst das Blocküberprüfungsmodul vorzugsweise ein Blockbewertungsmodul zum Überprüfen jedes Ausgangsdatenpunkts innerhalb des Datenpunktblocks, ob eine Abweichung des zugehörigen Ausgangsdatenwerts vom jeweiligen Referenzwert innerhalb des jeweiligen Toleranzwerts liegt. Vorzugsweise ist das Blockbewertungsmodul ausgelegt zum Erzeugen eines Blockbewertungsdatensatzes, der für jeden Datenpunktblock festlegt bzw. identifiziert, ob das Toleranzkriterium eingehalten wird oder nicht.

Vorzugsweise umfasst der sekundäre Kodierer:

- einen ersten sekundären Kodierer zum ersten sekundären Kodieren des Zwischendatensatzes zur Erzeugung eines komprimierten Zwischendatensatzes;
- einen zweiten sekundären Kodierer zum zweiten sekundären Kodieren des Blockbewertungsdatensatzes zur Erzeugung eines komprimierten Blockbewertungsdatensatzes; und
- einen Multiplexer (oder im Allgemeinen ein Kombiniermodul) zum Multiplexen (bzw. Kombinieren oder Bündeln) des komprimierten Zwischendatensatzes mit dem komprimierten Blockbewertungsdatensatz zur Erzeugung des komprimierten Datensatzes.

In einem weiteren Aspekt bietet die vorliegende Erfindung ein Verfahren zum Dekodieren eines komprimierten Datensatzes, der insbesondere durch ein Verfahren zum Kodieren gemäß der vorliegenden Erfindung insbesondere in einer der hier beschriebenen bevorzugten Ausführungsformen erzeugt wurde, zur Erzeugung eines rekonstruierten Ausgangsdatensatzes, in welchem für jeden einer Vielzahl von Ausgangsdatenpunkten jeweils ein rekonstruierter Ausgangsdatenwert $P*_1$, $P*_2$, $P*_3$, $P*_4$ festgelegt ist. Der rekonstruierte Ausgangsdatensatz bildet dabei den ursprünglichen Ausgangsdatensatz näherungsweise nach, wobei Abweichungen aufgrund der verlustbehafteten Kodierung auftreten können. Das Verfahren umfasst ein sekundäres Dekodieren des komprimierten Datensatzes zur Erzeugung eines rekonstruierten Zwischendatensatzes, welcher eine Vielzahl von Zwischendatenwerten festlegt, und eines Blockbewertungsdatensatzes, welcher für jeden Zwischendatenwert eine Zuweisungsvorschrift (mapping) darüber festlegt, ob dieser einen einzelnen Ausgangsdatenpunkt des zu rekonstruierenden Ausgangsdatensatzes oder einen Datenpunktblock repräsentiert, welcher eine Vielzahl von Ausgangsdatenpunkten des zu rekonstruierenden Ausgangsdatensatzes umfasst. Dieses Dekodieren wird hier als "sekundäres" Dekodieren bezeichnet, um dessen Korrespondenz zum "sekundären" Kodieren gemäß einem hier ebenfalls beschriebenen Kodierverfahren zu verdeutlichen. Insbesondere werden hier die dem sekundären Kodieren entsprechenden Dekodieralgorithmen verwendet. Im rekonstruierten Zwischendatensatz kann ein Teil der Vielzahl von Zwischendatenwerten jeweils einen Repräsentant eines einzelnen, zu rekonstruierenden Ausgangsdatenwertes darstellen, während ein anderer Teil der Vielzahl von Zwischendatenwerten jeweils einen Repräsentant für eine Vielzahl von zu rekonstruierenden Ausgangsdatenwerten darstellt, die insbesondere zu einem Datenpunktblock gehören.

Außerdem umfasst das Verfahren ein primäres Dekodieren des rekonstruierten Zwischendatensatzes zur Erzeugung des rekonstruierten Ausgangsdatensatzes gemäß den im Blockbewertungsdatensatz festgelegten Zuweisungsvorschriften. So werden vorzugsweise diejenigen Zwischendatenwerte, die genau einen Ausgangsdatenpunkt repräsentieren, direkt als der entsprechende rekonstruierte Ausgangsdatenwert verwendet. Für diejenigen Datenpunktblöcke, die von einem einzelnen rekonstruierten Zwischendatenwert repräsentiert werden, werden die entsprechenden rekonstruierten Ausgangsdatenwerte aus dem einzelnen rekonstruierten Zwischendatenwert, vorzugsweise auch unter Berücksichtigung der rekonstruierten Zwischendatenwerte und/oder der rekonstruierten Ausgangsdatenwerte zu benachbarten Ausgangsdatenpunkten abgeleitet. Dies kann beispielsweise durch einfaches Kopieren des entsprechenden rekonstruierten Zwischendatenwertes oder durch Interpolation erfolgen. Dieses Dekodieren wird hier als "primäres" Dekodieren bezeichnet, um dessen Korrespondenz zum "primären" Kodieren gemäß einem hier ebenfalls beschriebenen Kodierverfahren zu verdeutlichen.

Vorzugsweise umfasst das sekundäre Dekodieren:

- ein Extrahieren eines komprimierten Blockbewertungsdatensatzes und eines komprimierten Zwischendatensatzes aus dem komprimierten Datensatz (z.B. durch Demultiplexen);
- ein ersten sekundäres Dekodieren des komprimierten Zwischendatensatzes zur Erzeugung des rekonstruierten Zwischendatensatzes; und
- ein zweites sekundäres Dekodieren des komprimierten Blockbewertungsdatensatzes zur Erzeugung des Blockbewertungsdatensatzes.

Auch hier wiederum werden insbesondere für das erste bzw. zweite sekundäre Dekodieren die dem ersten bzw. zweiten sekundären Kodieren entsprechenden Algorithmen (z.B. JPEG-LS bzw. Huffman-Kodierung, usw.) verwendet. Dementsprechend wird an dieser Stelle hierzu lediglich auf die dortigen Ausführungen verwiesen, die in der Entsprechung auch hier gelten.

In einem weiteren Aspekt bietet die Erfindung ein (entsprechendes) System zum Dekodieren eines insbesondere durch ein erfindungsgemäßes Kodierverfahren erzeugten komprimierten Datensatzes, zur Erzeugung eines (näherungsweise) rekonstruierten Ausgangsdatensatzes, in welchem für jeden einer Vielzahl von Ausgangsdatenpunkten jeweils ein rekonstruierter Ausgangsdatenwert $P^*_1$, $P^*_2$, $P^*_3$, $P^*_4$ festgelegt ist, umfassend:

- einen sekundären Dekodierer zum sekundären Dekodieren des komprimierten Datensatzes zur Erzeugung

  -- eines rekonstruierten Zwischendatensatzes, welcher eine Vielzahl von Zwischendatenwerten festlegt; und
  -- eines Blockbewertungsdatensatzes, welcher für jeden Zwischendatenwert eine Zuweisungsvorschrift (ein Mapping) darüber festlegt, ob dieser einen einzelnen Ausgangsdatenpunkt des zu rekonstruierenden Ausgangsdatensatzes oder einen Datenpunktblock repräsentiert, welcher eine Vielzahl von Ausgangsdatenpunkten des zu rekonstruierenden Ausgangsdatensatzes umfasst; und

- einen primären Dekodierer zum primären Dekodieren des rekonstruierten Zwischendatensatzes zur Erzeugung des rekonstruierten Ausgangsdatensatzes gemäß den im Blockbewertungsdatensatz festgelegten Zuweisungsvorschriften.

Vorzugsweise umfasst der sekundäre Dekodierer:

- einen Demultiplexer (oder im Allgemeineren ein Separiermodul) zum Extrahieren (bzw. Separieren oder Trennen) eines komprimierten Blockbewertungsdatensatzes und eines komprimierten Zwischendatensatzes aus dem komprimierten Datensatz;
- einen ersten sekundären Dekodierer zum ersten sekundären Dekodieren des komprimierten Zwischendatensatzes zur Erzeugung des rekonstruierten Zwischendatensatzes; und
- einen zweiten sekundären Dekodierer zum zweiten sekundären Dekodieren des komprimierten Blockbewertungsdatensatzes zur Erzeugung des Blockbewertungsdatensatzes.

Vorzugsweise ist das System zum Dekodieren ausgelegt, ein Verfahren zum Dekodieren gemäß der vorliegenden Erfindung insbesondere in einer der hier beschriebenen bevorzugten Ausführungsformen auszuführen und/oder ein mit einem Verfahren bzw. System gemäß der vorliegenden Erfindung insbesondere in einer der hier beschriebenen bevorzugten Ausführungsformen erzeugten komprimierten Datensatz zu dekodieren.

In einem weiteren Aspekt bietet die Erfindung ein Computerprogrammerzeugnis, insbesondere einen Datenträger und/oder eine in einer Übertragungsleitung übertragene Signalfolge, welches Programmcode enthält, der, wenn er in einem Computersystem geladen und ausgeführt wird, dieses Computersystem dazu auslegt bzw. veranlasst, ein Verfahren gemäß der vorliegenden Erfindung insbesondere in einer der hier beschriebenen bevorzugten Ausführungsformen auszuführen.

Weitere Details insbesondere zu bevorzugten Ausführungsformen und Implementierungen der Erfindung werden nachfolgend unter Bezugnahme auf die beigefügten Zeichnungen beispielhaft erläutert. Dabei zeigen:

Fig. 1    ein Blockdiagramm zur Veranschaulichung eines Verfahrens und eines Systems zum Kodieren gemäß einer bevorzugten Ausführungsform der vorliegenden Erfindung;

Fig. 2    ein Blockdiagramm zur Veranschaulichung eines Verfahrens und eines Systems zum Dekodieren gemäß einer bevorzugten Ausführungsform der vorliegenden Erfindung; und

Fig. 3    schematische Diagramme zur Veranschaulichung von Kontext-Formulierungen und Scanreihenfolgen gemäß bevorzugter Ausführungsformen der vorliegenden Erfindung.

**Fig. 1** veranschaulicht ein Kodieren 100 gemäß einer bevorzugten Ausführungsform der vorliegenden Erfindung. Dabei wird von einem ursprünglichen Datensatz (z.B. einem Originalfoto) als Ausgangsdatensatz 110 ausgegangen. Dieser Ausgangsdatensatz enthält eine Vielzahl von Ausgangsdatenpunkten 112. Jeder Ausgangsdatenpunkt 112 kann den Ort (Koordinaten) eines Pixels des Originalfotos repräsentieren. Dabei ist im Ausgangsdatensatz 110 für jeden Ausgangsdatenpunkt 112 ein Ausgangsdatenwert $P_1$, $P_2$, ... festgelegt. Je nach der vom Ausgangsdatensatz 110 abgebildeten Information (z.B. Fotografie, Thermografie, Tomografie, usw.) repräsentiert jeder Ausgangsdatenwert eine entsprechende Information über einen Bildpunkt (z.B. Farbe, Helligkeit) oder einen physikalischen Messwert (z.B. Temperatur, elektrisches und/oder magnetisches Feld, usw.).

Der Ausgangsdatensatz 110 wird durch das in Fig. 1 dargestellt Verfahren kodiert, um einen komprimierten Datensatz 114 zu erhalten. Dazu umfasst das in Fig. 1 dargestellte Verfahren ein primäres Kodieren, wobei zunächst eine Vielzahl von Datenpunktblöcken 118 festgelegt werden. Dazu werden die Ausgangsdatenpunkte 112 (nachfolgend der Einfachheit halber auch nur als Pixel bezeichnet) in einzelne Blöcke unterteilt. In der in Fig. 1 dargestellten Ausführungsform sind dies Blöcke mit 2 x 2 Pixeln. Jeder Block enthält also 4 Pixel. Vorzugsweise überlappen die Blöcke nicht, so dass vorzugsweise jedes Pixel genau einem Datenpunktblock 118 zugeordnet ist.

Nun wird für jeden Datenpunktblock 118 mittels eines Blockwertermittlungsmodules 130 ein Blockdatenwert 120 ermittelt, und zwar in Abhängigkeit von den vier Ausgangsdatenwerten $P_1$, $P_2$, $P_3$ und $P_4$ der Pixel innerhalb des jeweiligen Datenpunktblocks 118. Beispielsweise kann der Blockdatenwert als Mittelwert $P_m$ aller vier Werte $P_1$, $P_2$, $P_3$ und $P_4$ ermittelt werden. Dieser Blockdatenwert $P_m$ repräsentiert damit den gesamten Datenpunktblock 118, also die Datenwerte alle vier Pixel gleichzeitig. Wie nun beurteilt wird, ob der Blockdatenwert $P_m$ ein ausreichend guter Repräsentant für den ganzen Datenpunktblock 118 ist, wird für die hier dargestellte bevorzugte Ausführungsform nachfolgend beschrieben.

Ein in der Ausführungsform von Fig. 1 dargestelltes Abweichungsermittlungsmodul 134 ist ausgelegt, für jedes Pixel eine Abweichung $D_1$, $D_2$, $D_3$, $D_4$ des jeweiligen Ausgangsdatenwerts $P_1$, $P_2$, $P_3$ und $P_4$ vom Blockdatenwert $P_m$ insbesondere als Differenzbetrag

$$D_i = |P_i - P_m| \ \ f\ddot{u}r \ \ i = 1 \dots 4 \qquad\qquad (7)$$

zu ermitteln.

Außerdem ist in der dargestellten Ausführungsform ein Toleranzwertermittlungsmodul 132 vorgesehen, das für jedes Pixel des Ausgangsdatensatzes 110 einen Toleranzwert 122 ermittelt. Wie gemäß einer bevorzugten Ausführungsform beispielsweise für die Pixel des in Fig. 1 dargestellten Datenpunktblocks 118 entsprechende Toleranzwerte $JND_1$, $JND_2$, $JND_3$, $JND_4$ ermittelt werden können, ist in den obigen Gleichungen (1) bis (6d) gezeigt.

Insbesondere auf Grundlage der Toleranzwerte $JND_1$, $JND_2$, $JND_3$, $JND_4$ und der Abweichungen $D_1$, $D_2$, $D_3$, $D_4$ entscheidet ein Blockbewertungsmodul 136, ob der repräsentative Wert den gesamten Datenpunktblock 118 ausreichend gut repräsentiert und gibt das Resultat als Blockbewertungsdatensatz 124 aus. Somit legt der Blockbewertungsdatensatz 124 für jeden Datenpunktblock 118 fest, ob dieser Datenpunktblock einen besonders sensiblen Bereich (auch "region of interest" ROI bezeichnet) repräsentiert. Mittels dieses Blockbewertungsdatensatzes 124 wird nun ein Kompositionsmodul 138 angesteuert, das die Erstellung bzw. Zusammensetzung eines Zwischendatensatzes 116 bestimmt. Insbesondere wird der Zwischendatensatz 116 derart erzeugt, dass er für jeden sensiblen Bereich bzw. Datenpunktblock ROI alle Ausgangsdatenwerte $P_1$, $P_2$, $P_3$ und $P_4$ einzeln und für jeden nicht sensiblen Datenpunktblock (non-ROI) nur den Blockdatenwert $P_m$ als Repräsentant für die Ausgangsdatenwerte enthält. Beispielsweise kann der Inhalt des Blockbewertungsdatensatzes 124 gemäß der Vorschrift

$$isROI = \begin{cases} 0, & falls \ D_1 < JND_1 \ \wedge \ D_2 < JND_2 \ \wedge \ D_3 < JND_3 \ \wedge \ D_4 < JND_4 \\ 1, & ansonsten \end{cases} \qquad (8)$$

ermittelt werden, wobei der Wert "isROI" festlegt, ob der entsprechende Datenpunktblock ein sensibler Datenpunktblock ist (isROI = 1), also das Toleranzkriterium nicht einhält, oder ein nicht sensibler Datenpunktblock ist (isROI = 0), also das Toleranzkriterium einhält. Jeder Datenpunktblock mit isROI = 0 wird auf diese Weise bereits sehr Wirkungsvoll komprimiert, da jedenfalls der Zwischendatensatz 116 hierfür nur einen einzigen anstelle von vier Werten enthält. Diese Reduktion an Datenmenge ist umso ausgeprägter je größer der Anteil an nicht sensiblen Datenblöcken und je größer gleichzeitig die Datenblöcke sind. Nachdem aber die Wahrscheinlichkeit, dass in einem Datenpunktblock zumindest ein Ausgangsdatenwert nicht innerhalb des erforderlichen Toleranzbereichs liegt und der Datenpunktblock somit sensibel ist, bei vorgegebenem Toleranzkriterium mit der Größe der Datenpunktblöcke steigt, sollten diese eben nicht zu groß gewählt werden.

Der Reduktion der Datenmenge durch ein Repräsentieren einer ganzen Gruppe von Pixeln mit nur einem einzigen Wert im Zwischendatensatz steht allerdings bei der dargestellten Vorgehensweise teilweise entgegen, dass zusätzlich zu den reinen Datenwerten im Zwischendatensatz 116 auch noch der Blockbewertungsdatensatz 124 wichtige Informationen enthält und gespeichert bzw. übertragen werden muss. Insbesondere ist darin ja gerade festgelegt, welche Bedeutung die einzelnen Werte im Zwischendatensatz 116 spielen, ob sie also jeweils ein einzelnes Pixel oder eine ganze Gruppe von Pixeln repräsentieren. Der Blockbewertungsdatensatz ist daher für die korrekte Zuordnung der Werte im Zwischendatensatz 116 zu den Pixeln nötig. Allerdings genügt hierfür im Blockbewertungsdatensatz eine binäre Aussage, also ein einzelnes Bit pro Datenpunktblock.

Vorzugsweise werden der Zwischendatensatz 116 und der Blockbewertungsdatensatz 124 bevor sie zu dem komprimierten Datensatz 114 kombiniert werden jeweils mittels eines ersten sekundären Kodierers 140 bzw. eines zweiten sekundären Kodierers 142 kodiert. Dadurch entstehen ein komprimierter Zwischendatensatz 126 und ein komprimierter Blockbewertungsdatensatz 128, die vorzugsweise mittels eines Multiplexers 144 zum komprimierten Datensatz kombiniert werden.

Während der zweite sekundäre Kodierer 142 vorzugsweise verlustfrei arbeitet, um keine Zuordnungsinformationen zu verlieren, können im ersten sekundären Kodierer 140 zugunsten einer höheren Kompressionsrate zumindest kleine Verluste zugelassen werden. Beispielsweise kann der zweite sekundäre Kodierer auf Basis einer Huffman-Kodierung arbeiten. Die erste sekundäre Kodierung kann beispielsweise auf Basis der JPEG-LS-Kodierung aufgebaut werden. Selbst für eine verlustbehaftete erste sekundäre Kodierung kann die Bildung von Artefakten dadurch unterdrückt werden, dass die zugelassenen Verluste entsprechend klein gewählt werden. In Kombination mit dem primären Kodieren ergibt sich dabei dennoch eine recht gute Kompressionsrate.

Für die verlustbehaftete Kodierung definiert JPEG-LS einen Parameter $\delta$ für die Quantisierung, der ein Maß für den zugelassen Fehler, also die Abweichung eines rekonstruierten Wertes vom ursprünglichen Wert darstellt. In JPEG-LS bleibt der Wert für den Parameter $\delta$ für einen kompletten Scan, also für ein gesamtes Bild konstant. In einer bevorzugten Ausführungsform der Erfindung allerdings, wird der Parameter $\delta$ in Abhängigkeit vom Blockbewertungsdatensatz lokal variiert. So wird vorzugsweise ein Wert *isROI* = 0, also ein nicht sensibler Datenblock, als ein Bereich mit einer hohen Qualitätsanforderung für eine Quantisierung im (ersten) sekundären Kodierer verstanden. Damit kann beispielsweise die herkömmlich oft störende Artefaktbildung (z.B. Streifenbildung) von JPEG-LS in solchen Bereichen unterdrückt werden. So erfolgt in JPEG-LS die Quantisierung eines Vorhersagerests bzw. Prädiktionsrests (engl. "prediction residual") $\epsilon$ gemäß

$$Q(\epsilon) = sign(\epsilon) \cdot \left\lfloor \frac{|\epsilon| + \delta}{2\delta + 1} \right\rfloor$$

Gemäß einer bevorzugten Ausführungsform der Erfindung können die Qualitätsverluste lokal dadurch steuert werden, dass der Parameter $\delta$ in Abhängigkeit von einer Pixelposition *i* gemäß

$$Q(\epsilon_i) = sign(\epsilon_i) \cdot \left\lfloor \frac{|\epsilon_i| + \delta_i}{2\delta_i + 1} \right\rfloor$$

lokal verändert wird. Dies erfolgt besonders bevorzugt in Abhängigkeit vom Blockbewertungsdatensatz 124, beispielsweise gemäß

$$\delta_i = \begin{cases} N, & falls\ i \in ROI - Block \\ max\{N - 3,0\}, & ansonsten \end{cases}$$

Für eine recht hohe Qualität bei der Kodierung kann beispielsweise N = 3 gewählt werden. In diesem Fall werden die nicht sensiblen Datenpunktblöcke (non-*ROI*) mit $\delta$ = 0, also verlustfrei komprimiert, während ROI-Bereiche mit $\delta$ = 3 komprimiert werden.

Der Blockbewertungsdatensatz 124 spielt somit nicht nur für die Zuordnung der Werte im Zwischendatensatz 116 zu den einzelnen Pixel-Positionen, sondern auch als Qualitätskriterium für die Quantisierung im (ersten) sekundären Kodierer 140 eine Rolle. Dazu wird der Blockbewertungsdatensatz 124 vorzugsweise dem ersten sekundären Kodierer 140 zugeführt, wie dies auch in Fig. 1 dargestellt ist. Auch wenn im obigen Beispiel die Quantisierung anhand von JPEG-LS genauer beschrieben wurde, spielt eine entsprechende Quantisierung auch in anderen verlustbehafteten Kodierern eine Rolle und kann dort in Abhängigkeit vom Blockbewertungsdatensatz gesteuert werden.

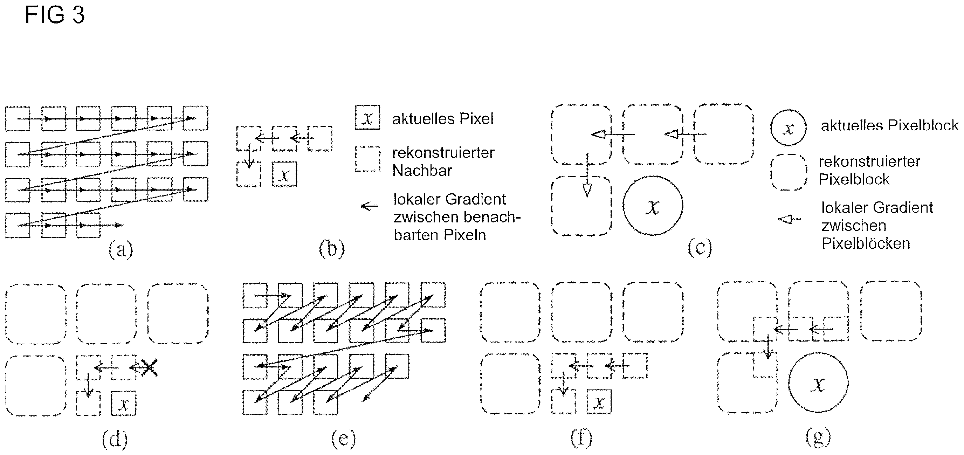

Insbesondere bei Verwendung einer ersten sekundären Kodierung auf Basis einer JPEG-LS-Kodierung kann der Blockbewertungsdatensatz neben einer Ansteuerung der Quantisierung auch für eine Definition des Umfeldes bzw. Kontexts der einzelnen Pixel herangezogen werden. Insbesondere nutzt die JPEG-LS-Kodierung, wie viele andere Kodierungen auf Basis von Prädiktionsverfahren, Informationen aus dem lokalen Umfeld eines Pixels für Vorhersagen über das entsprechende aktuelle Pixel. Insbesondere soweit aber beispielsweise aus Speicherplatz- und Geschwindigkeitsgründen auch im ersten sekundären Kodierer darauf verzichtet werden soll, alle einzelnen Pixel aus Datenpunktblöcken wieder zu expandieren, kann es zur Anwendung der etablierten Kontext-Formulierung (z.B. lokaler Gradienten) im Umfeld der einzelnen Pixel vorteilhaft sein, die Scan-Reihenfolge anzupassen. Dies wird insbesondere anhand von **Fig. 3** deutlich. Dabei zeigt Fig. 3(a) eine übliche Scanreihenfolge für Prädiktionsverfahren, wie es insbesondere auch für JPEG-LS eingesetzt werden kann. Fig. 3(b) veranschaulicht eine übliche Kontext-Regel, gemäß der ein lokaler Gradient für das aktuelle Pixel anhand von rekonstruierten Nachbarpixeln ermittelt wird, die in der Scan-Reihenfolge von Fig. 3(a) bereits durchlaufen wurden. Dem Grunde nach lässt sich diese Regel gemäß Fig. 3(c) analog auf einen Datensatz mit lauter Datenpunktblöcken anstelle von Pixeln anwenden.

Enthält der Zwischendatensatz 116 aber eine Kombination aus Pixel-Werten und Blockdatenwerten, dann kann es bei der Scan-Reihenfolge gemäß Fig. 3(a) zu einer Situation wie in Fig. 3(d) gezeigt kommen, bei der die Gradientenbildung nicht mehr auf lauter bereits durchlaufene Pixel bzw. Datenpunktblöcke zugreifen kann. Aus diesem Grund wird vorgeschlagen, die Scanreihenfolge zumindest bei Verwendung von 2 x 2 - Blöcken gemäß Fig. 3(e) zu modifizieren. Für andere Größen bzw. Formen der Datenpunktblöcke kann die Scanreihenfolge sinngemäß angepasst werden, um eine Prädiktion auch gemäß den Beispielen von Fig. 3(f) und 3(g) anhand der etablierten Kontext-Regeln durchzuführen.

**Fig. 2** veranschaulicht ein Dekodieren 200 gemäß einer bevorzugten Ausführungsform der vorliegenden Erfindung. Soweit Elemente analog zu entsprechenden Elementen beim Kodieren 100 gemäß Fig. 1 auftreten, werden diese mit gleichen Bezugszeichen verwendet. Dabei wird insbesondere von dem beim Kodieren erzeugten komprimierten Datensatz 114 ausgegangen. Dieser wird vorzugsweise in einem Demultiplexer 210 wieder in den komprimierten Blockbewertungsdatensatz 128 und den komprimierten Zwischendatensatz 126 zerlegt. Während der komprimierte Zwischendatensatz 126 in einem ersten sekundären Dekodierer 212 dekodiert wird, um daraus einen rekonstruierten Zwischendatensatz 214 zu erhalten, wird aus dem komprimierten Blockbewertungsdatensatz 128 mittels eines zweiten sekundären Dekodierers 216 vorzugsweise wieder der Blockbewertungsdatensatz 124 erhalten. Dieser ist vorzugsweise identisch bzw. zumindest inhaltsgleich zu dem beim Kodieren erzeugten Blockbewertungsdatensatz 124. Je nach ersten sekundären Kodier- bzw. Dekodierverfahren kann sich der rekonstruierte Zwischendatensatz 214 von dem beim Kodieren erzeugten Zwischendatensatz 116 (leicht) unterscheiden, insbesondere wenn der ersten sekundäre Kodierer 140 einen verlustbehafteten Kodieralgorithmus anwendet.

Da der Blockbewertungsdatensatz 124 wie bereits beschrieben alle nötigen Informationen zur Zuweisung der Dateninhalte des Zwischendatensatzes 116 und damit auch des rekonstruierten Zwischendatensatzes 214 zu einzelnen Ausgangsdatenpunkten bzw. Datenpunktblöcken im Ausgangsdatensatz 110 und damit auch in einem zu rekonstruierenden Ausgangsdatensatz 220 enthält, kann ein primärer Dekodierer 218 den zu rekonstruierenden Ausgangsdatensatz 220 erzeugen.

Damit bietet die Erfindung ein sehr einfaches und damit schnelles Kodieren und Dekodieren, bei dem selbst bei hohen Anforderungen an die Qualität insbesondere für eine visuelle Darstellung eine gute Kompressionsrate erreicht wird.

**Bezugszeichenliste**

| | |
|---|---|
| 100 | Kodierverfahren |
| 110 | Ausgangsdatensatz |
| 112 | Ausgangsdatenpunkte |
| 114 | komprimierter Datensatz |
| 116 | Zwischendatensatz |
| 118 | Datenpunktblock |
| 120 | Blockdatenwert |
| 122 | Toleranzwert |
| 124 | Blockbewertungsdatensatz |
| 126 | komprimierter Zwischendatensatz |
| 128 | komprimierter Blockbewertungsdatensatz |
| 130 | Blockwertermittlungsmodul |
| 132 | Toleranzwertermittlungsmodul |
| 134 | Abweichungsermittlungsmodul |
| 136 | Blockbewertungsmodul |
| 138 | Kompositionsmodul |
| 140 | erster sekundärer Kodierer |
| 142 | zweiter sekundärer Kodierer |
| 144 | Multiplexer |
| 210 | Demultiplexer |
| 212 | erster sekundärer Dekodierer |
| 214 | rekonstruierter Zwischendatensatz |
| 216 | zweiter sekundärer Dekodierer |

218      primärer Dekodierer
220      dekodierter Datensatz (rekonstruierter Ausgangsdatensatz)

**Patentansprüche**

1. Computer-implementiertes Verfahren (100) zum Kodieren eines Ausgangsdatensatzes (110), in welchem für jeden einer Vielzahl von Ausgangsdatenpunkten (112) jeweils ein Ausgangsdatenwert ($P_1$; $P_2$; $P_3$; $P_4$) festgelegt ist, zur Erzeugung eines komprimierten Datensatzes (114), umfassend:

   - primäres Kodieren des Ausgangsdatensatzes (110) zum Erzeugen eines Zwischendatensatzes (116), umfassend:

      -- Festlegen einer Vielzahl von Datenpunktblöcken (118), welche jeweils eine Vielzahl von Ausgangsdatenpunkten (112) des Ausgangsdatensatzes (110) umfassen;
      -- Ermitteln eines Blockdatenwerts (120) für jeden Datenpunktblock (118) aus der Vielzahl von Ausgangsdatenwerten ($P_1$; $P_2$; $P_3$; $P_4$) innerhalb des jeweiligen Datenpunktblockes (118);
      -- Überprüfen jedes Datenpunktblocks (118) auf Einhaltung eines Toleranzkriteriums; und
      -- Generieren des Zwischendatensatzes (116) derart, dass der Zwischendatensatz (116) für jeden Datenpunktblock (118), in dem das Toleranzkriterium eingehalten ist, den Blockdatenwert (120) als einzigen Datenwert enthält und für jeden Datenpunktblock (118), in dem das Toleranzkriterium nicht eingehalten ist, die einzelnen Ausgangsdatenwerte ($P_1$; $P_2$; $P_3$; $P_4$) an den Ausgangsdatenpunkten (112) des jeweiligen Datenpunktblockes (118) enthält; und

   - sekundäres Kodieren des Zwischendatensatzes (116) zum Erzeugen des komprimierten Datensatzes (114); **dadurch gekennzeichnet, dass** das Überprüfen jedes Datenpunktblocks (118) auf Einhaltung des Toleranzkriteriums umfasst:
   - Ermitteln eines Toleranzwertes (122) für jeden Ausgangsdatenpunkt (112);
   - Ermitteln eines Referenzwertes für jeden Ausgangsdatenpunkt in Abhängigkeit vom ermittelten Blockdatenwert des jeweiligen Datenpunktblocks; und
   - Überprüfen jedes Ausgangsdatenpunkts innerhalb des Datenpunktblocks, ob eine Abweichung ($D_1$; $D_2$; $D_3$; $D_4$) des zugehörigen Ausgangsdatenwerts vom jeweiligen Referenzwert innerhalb des jeweiligen Toleranzwerts liegt; und

   wobei das Ermitteln eines Toleranzwertes (122) für jeden Ausgangsdatenpunkt (112) in Abhängigkeit von den Ausgangsdatenwerten von benachbarten Ausgangsdatenpunkten erfolgt.

2. Verfahren nach Anspruch 1, wobei für jeden Datenpunktblock (118) der Blockdatenwert (120) als Referenzwert für jeden Ausgangsdatenpunkt (112) innerhalb des jeweilgen Datenpunktblocks (118) verwendet wird.

3. Verfahren nach einem der vorangegangenen Ansprüche, wobei jeder Datenpunktblock $n$ x $n$ Ausgangsdatenpunkte umfasst, wobei $n$ eine natürliche Zahl größer oder gleich 2 ist.

4. Verfahren nach einem der vorangegangenen Ansprüche, wobei das Überprüfen jedes Datenpunktblocks (118) auf Einhaltung eines Toleranzkriteriums ein Erzeugen eines Blockbewertungsdatensatzes (124) umfasst, der für jeden Datenpunktblock (118) festlegt, ob das Toleranzkriterium eingehalten wird oder nicht.

5. Verfahren nach Anspruch 4, wobei das sekundäre Kodieren des Zwischendatensatzes (116) zum Erzeugen des komprimierten Datensatzes (114) umfasst:

   - ein erstes sekundäres Kodieren des Zwischendatensatzes (116) zur Erzeugung eines komprimierten Zwischendatensatzes (126);
   - ein zweites sekundäres Kodieren des Blockbewertungsdatensatzes (124) zur Erzeugung eines komprimierten Blockbewertungsdatensatzes (128); und
   - ein Multiplexen des komprimierten Zwischendatensatzes (126) mit dem komprimierten Blockbewertungsdatensatz (128) zur Erzeugung des komprimierten Datensatzes (114).

6. Verfahren nach Anspruch 4 oder 5, wobei das sekundäre Kodieren des Zwischendatensatzes ein verlustbehaftetes Komprimieren durch Quantisieren mit einem lokalen Quantisierungsfehler umfasst, der für jeden Datenpunktblock in Abhängigkeit vom Blockbewertungsdatensatz ermittelt wird.

7. System zum Kodieren eines Ausgangsdatensatzes (110), in welchem für jeden einer Vielzahl von Ausgangsdatenpunkten (112) jeweils ein Ausgangsdatenwert ($P_1$; $P_2$; $P_3$; $P_4$) festgelegt ist, zur Erzeugung eines komprimierten Datensatzes (114), umfassend:

   - einen primären Kodierer zum Kodieren des Ausgangsdatensatzes (110) zum Erzeugen eines Zwischendatensatzes (116), umfassend:

      -- ein Blockerzeugungsmodul zum Festlegen einer Vielzahl von Datenpunktblöcken (118), welche jeweils eine Vielzahl von Ausgangsdatenpunkten (112) des Ausgangsdatensatzes (110) umfassen;
      -- ein Blockwertermittlungsmodul (130) zum Ermitteln eines Blockdatenwerts (120) für jeden Datenpunktblock (118) aus der Vielzahl von Ausgangsdatenwerten ($P_1$; $P_2$; $P_3$; $P_4$) innerhalb des jeweiligen Datenpunktblockes (118);
      -- ein Blocküberprüfungsmodul (132, 134) zum Überprüfen jedes Datenpunktblocks (118) auf Einhaltung eines Toleranzkriteriums; und
      -- ein Kompositionsmodul (138) zum Generieren des Zwischendatensatzes (116) derart, dass der Zwischendatensatz (116) für jeden Datenpunktblock (118), in dem das Toleranzkriterium eingehalten ist, den Blockdatenwert (120) als einzigen Datenwert enthält und für jeden Datenpunktblock (118), in dem das Toleranzkriterium nicht eingehalten ist, die einzelnen Ausgangsdatenwerte ($P_1$; $P_2$; $P_3$; $P_4$) an den Ausgangsdatenpunkten (112) des jeweiligen Datenpunktblockes (118) enthält; und

   - einen sekundären Kodierer zum Kodieren des Zwischendatensatzes (116) zum Erzeugen des komprimierten Datensatzes (114); **dadurch gekennzeichnet, dass** das Überprüfen jedes Datenpunktblocks (118) auf Einhaltung des Toleranzkriteriums umfasst:

      - Ermitteln eines Toleranzwertes (122) für jeden Ausgangsdatenpunkt (112);
      - Ermitteln eines Referenzwertes für jeden Ausgangsdatenpunkt in Abhängigkeit vom ermittelten Blockdatenwert des jeweiligen Datenpunktblocks; und
      - Überprüfen jedes Ausgangsdatenpunkts innerhalb des Datenpunktblocks, ob eine Abweichung ($D_1$; $D_2$; $D_3$; $D_4$) des zugehörigen Ausgangsdatenwerts vom jeweiligen Referenzwert innerhalb des jeweiligen Toleranzwerts liegt; und

   wobei das Ermitteln eines Toleranzwertes (122) für jeden Ausgangsdatenpunkt (112) in Abhängigkeit von den Ausgangsdatenwerten von benachbarten Ausgangsdatenpunkten erfolgt.

8. System nach Anspruch 7, welches ausgelegt ist, ein Verfahren gemäß einem der Ansprüche 1 bis 6 auszuführen.

9. Computerprogrammerzeugnis, welches Programmcode enthält, der, wenn er in einem Computersystem geladen und ausgeführt wird, dieses Computersystem dazu auslegt bzw. veranlasst, ein Verfahren gemäß einem der Ansprüche 1 bis 6 auszuführen.

**Claims**

1. A computer-implemented method (100) for coding an output data set (110), in which respectively one output data value ($P_1$; $P_2$; $P_3$; $P_4$) is specified for each of a plurality of output data points (112), for generating a compressed data set (114), comprising:

   - primary encoding of the output data set (110) for generating an intermediate data set (116), comprising:

      -- specifying a plurality of data point blocks (118) each comprising a plurality of output data points (112) of the output data set (110);
      -- determining a block data value (120) for each data point block (118) from the plurality of output data values ($P_1$; $P_2$; $P_3$; $P_4$) within the respective data point block (118);
      -- checking each data point block (118) for compliance with a tolerance criterion; and
      -- generating the intermediate data set (116) such that the intermediate data set (116) for each data point block (118) in which the tolerance criterion is complied with contains the block data value (120) as a single data value and for each data point block (118) in which the tolerance criterion is not complied with contains the individual output data values ($P_1$; $P_2$; $P_3$; $P_4$) at the output data points (112) of the respective data point block (118); and

- secondary encoding of the intermediate data set (116) for generating the compressed data set (114);

**characterized in that** checking each data point block (118) for compliance with the tolerance criterion comprises:

- determining a tolerance value (122) for each output data point (112);
- determining a reference value for each output data point as a function of the determined block data value of the respective data point block; and
- checking each output data point within the data point block as to whether a deviation ($D_1$; $D_2$; $D_3$; $D_4$) of the associated output data value from the respective reference value lies within the respective tolerance value; and

wherein determining a tolerance value (122) for each output data point (112) takes place as a function of the output data values of neighboring output data points.

2. The method according to claim 1, wherein for each data point block (118) the block data value (120) is used as a reference value for each output data point (112) within the respective data point block (118).

3. The method according to one of the preceding claims, wherein each data point block comprises $n$ x $n$ output data points, where $n$ is a natural number greater than or equal to 2.

4. The method according to one of the preceding claims, wherein checking each data point block (118) for compliance with a tolerance criterion comprises generating a block evaluation data set (124) that defines for each data point block (118) whether the tolerance criterion is complied with or not.

5. The method according to claim 4, wherein secondary encoding the intermediate data set (116) for generating the compressed data set (114) comprises:

- first secondary encoding of the intermediate data set (116) for generating a compressed intermediate data set (126);
- second secondary encoding of the block evaluation data set (124) for generating a compressed block evaluation data set (128); and
- multiplexing the compressed intermediate data set (126) with the compressed block evaluation data set (128) for generating the compressed data set (114).

6. The method according to claim 4 or 5, wherein secondary coding of the intermediate data set comprises lossy compression by quantization with a local quantization error determined for each data point block as a function of the block evaluation data set.

7. A system for encoding an output data set (110), in which respectively one output data value ($P_1$; $P_2$; $P_3$; $P_4$) is specified for each of a plurality of output data points (112), for generating a compressed data set (114), comprising:

- a primary encoder for encoding of the output data set (110) for generating an intermediate data set (116), comprising:

-- a block generating module for specifying a plurality of data point blocks (118) each comprising a plurality of output data points (112) of the output data set (110);
-- a block value determining module (130) for determining a block data value (120) for each data point block (118) from the plurality of output data values ($P_1$; $P_2$; $P_3$; $P_4$) within the respective data point block (118);
-- a block checking module (132, 134) for checking each data point block (118) for compliance with a tolerance criterion; and
-- a composition module (138) generating the intermediate data set (116) such that the intermediate data set (116) for each data point block (118) in which the tolerance criterion is complied with contains the block data value (120) as a single data value and for each data point block (118) in which the tolerance criterion is not complied with contains the individual output data values ($P_1$; $P_2$; $P_3$; $P_4$) at the output data points (112) of the respective data point block (118); and

- a secondary encoder for encoding of the intermediate data set (116) for generating the compressed data set (114);

**characterized in that** checking each data point block (118) for compliance with the tolerance criterion comprises:

- determining a tolerance value (122) for each output data point (112);
- determining a reference value for each output data point as a function of the determined block data value of the respective data point block; and
- checking each output data point within the data point block as to whether a deviation ($D_1$; $D_2$; $D_3$; $D_4$) of the associated output data value from the respective reference value lies within the respective tolerance value; and

wherein determining a tolerance value (122) for each output data point (112) takes place as a function of the output data values of neighboring output data points.

8.  The system according to claim 7, which is configured to execute a method according to one of claims 1 to 6.

9.  A computer program product including program code, which, when loaded and executed in a computer system, configures or causes this computer system to execute a method according to one of claims 1 to 6.


**Revendications**

1.  Procédé mis en œuvre par ordinateur (100) pour le codage d'un ensemble de données de départ (110), dans lequel pour chacun d'une pluralité de points de données de départ (112), une valeur de données de départ ($P_1$ ; $P_2$; $P_3$ ; $P_4$) est à chaque fois définie, pour la production d'un ensemble de données compressé (114), comprenant :

    - codage primaire de l'ensemble de données de départ (110) pour la production d'un ensemble de données intermédiaire (116), comprenant :

        -- définition d'une pluralité de blocs de points de données (118) qui comprennent chacun une pluralité de points de données de départ (112) de l'ensemble de données de départ (110) ;
        -- détermination d'une valeur de données de bloc (120) pour chaque bloc de points de données (118) à partir de la pluralité de valeurs de données de départ ($P_1$ ; $P_2$ ; $P_3$ ; $P_4$) au sein du bloc de points de données respectif (118) ;
        -- vérification de chaque bloc de points de données (118) quant au respect d'un critère de tolérance ; et
        -- génération de l'ensemble de données intermédiaire (116) de telle sorte que l'ensemble de données intermédiaire (116) pour chaque bloc de points de données (118) dans lequel le critère de tolérance est respecté contient la valeur de données de bloc (120) en tant que valeur de données unique et pour chaque bloc de points de données (118) dans lequel le critère de tolérance n'est pas respecté contient les valeurs de données de départ individuelles ($P_1$ ; $P_2$ ; $P_3$ ; $P_4$) aux points de données de départ (112) du bloc de points de données respectif (118) ; et
        - codage secondaire de l'ensemble de données intermédiaire (116) pour la production de l'ensemble de données compressé (114) ;

    **caractérisé en ce que**
    la vérification de chaque bloc de points de données (118) quant au respect du critère de tolérance comprend :

        - détermination d'une valeur de tolérance (122) pour chaque point de données de départ (112) ;
        - détermination d'une valeur de référence pour chaque point de données de départ en fonction de la valeur de données de bloc déterminée du bloc de points de données respectif ;
        et
        - vérification de chaque point de données de départ au sein du bloc de points de données quant au fait qu'un écart ($D_1$ ; $D_2$ ; $D_3$ ; $D_4$) entre la valeur de données de départ associée et la valeur de référence respective se situe au sein de la valeur de tolérance respective ; et

    dans lequel la détermination d'une valeur de tolérance (122) pour chaque point de données de départ (112) s'effectue en fonction des valeurs de données de départ de points de données de départ voisins.

2. Procédé selon la revendication 1, dans lequel pour chaque bloc de points de données (118), la valeur de données de bloc (120) est utilisée en tant que valeur de référence pour chaque point de données de départ (112) au sein du bloc de points de données respectif (118).

3. Procédé selon une des revendications précédentes, dans lequel chaque bloc de points de données comprend *n* x *n* points de données de départ, dans lequel *n* est un nombre naturel supérieur ou égal à 2.

4. Procédé selon une des revendications précédentes, dans lequel la vérification de chaque bloc de points de données (118) quant au respect d'un critère de tolérance comprend une production d'un ensemble de données d'évaluation de bloc (124) qui définit pour chaque bloc de points de données (118) si le critère de tolérance est respecté ou non.

5. Procédé selon la revendication 4, dans lequel le codage secondaire de l'ensemble de données intermédiaire (116) pour la production de l'ensemble de données compressé (114) comprend :

   - un premier codage secondaire de l'ensemble de données intermédiaire (116) pour la production d'un ensemble de données intermédiaire compressé (126) ;
   - un second codage secondaire de l'ensemble de données d'évaluation de bloc (124) pour la production d'un ensemble de données d'évaluation de bloc compressé (128) ; et
   - un multiplexage de l'ensemble de données intermédiaire compressé (126) avec l'ensemble de données d'évaluation de bloc compressé (128) pour la production de l'ensemble de données compressé (114).

6. Procédé selon la revendication 4 ou 5, dans lequel le codage secondaire de l'ensemble de données intermédiaire comprend une compression avec perte par quantification avec une erreur de quantification locale qui est déterminée pour chaque bloc de points de données en fonction de l'ensemble de données d'évaluation de bloc.

7. Système pour le codage d'un ensemble de données de départ (110), dans lequel pour chacun d'une pluralité de points de données de départ (112), une valeur de données de départ ($P_1$ ; $P_2$ ; $P_3$ ; $P_4$) est à chaque fois définie, pour la production d'un ensemble de données compressé (114), comprenant :

   - un codeur primaire pour le codage de l'ensemble de données de départ (110) pour la production d'un ensemble de données intermédiaire (116), comprenant :

     -- un module de production de bloc pour la définition d'une pluralité de blocs de points de données (118) qui comprennent chacun une pluralité de points de données de départ (112) de l'ensemble de données de départ (110) ;
     -- un module de détermination de valeur de bloc (130) pour la détermination d'une valeur de données de bloc (120) pour chaque bloc de points de données (118) à partir de la pluralité de valeurs de données de départ ($P_1$ ; $P_2$ ; $P_3$ ; $P_4$) au sein du bloc de points de données respectif (118) ;
     -- un module de vérification de bloc (132, 134) pour la vérification de chaque bloc de points de données (118) quant au respect d'un critère de tolérance ; et
     -- un module de composition (138) pour la génération de l'ensemble de données intermédiaire (116) de telle sorte que l'ensemble de données intermédiaire (116) pour chaque bloc de points de données (118) dans lequel le critère de tolérance est respecté contient la valeur de données de bloc (120) en tant que valeur de données unique et pour chaque bloc de points de données (118) dans lequel le critère de tolérance n'est pas respecté contient les valeurs de données de départ individuelles ($P_1$ ; $P_2$ ; $P_3$ ; $P_4$) aux points de données de départ (112) du bloc de points de données respectif (118) ; et
   - un codeur secondaire pour le codage de l'ensemble de données intermédiaire (116) pour la production de l'ensemble de données compressé (114) ;

   **caractérisé en ce que**
   la vérification de chaque bloc de points de données (118) quant au respect du critère de tolérance comprend :

     - détermination d'une valeur de tolérance (122) pour chaque point de données de départ (112) ;
     - détermination d'une valeur de référence pour chaque point de données de départ en fonction de la valeur de données de bloc déterminée du bloc de points de données respectif ;
     et

- vérification de chaque point de données de départ au sein du bloc de points de données quant au fait qu'un écart ($D_1$ ; $D_2$ ; $D_3$ ; $D_4$) entre la valeur de données de départ associée et la valeur de référence respective se situe au sein de la valeur de tolérance respective ; et

dans lequel la détermination d'une valeur de tolérance (122) pour chaque point de données de départ (112) s'effectue en fonction des valeurs de données de départ de points de données de départ voisins.

8. Système selon la revendication 7, qui est conçu pour réaliser un procédé selon une des revendications 1 à 6.

9. Produit de programme informatique, qui contient du code de programme qui, lorsqu'il est chargé et exécuté dans un système informatique, prévoit ou amène ce système informatique pour/à réaliser un procédé selon une des revendications 1 à 6.

FIG 1

100

FIG 2

200

EP 3 434 015 B1

FIG 3

aktuelles Pixelblock

rekonstruierter Pixelblock

lokaler Gradient zwischen Pixelblöcken

aktuelles Pixel

rekonstruierter Nachbar

lokaler Gradient zwischen benachbarten Pixeln

(a) (b) (c) (d) (e) (f) (g)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012294358 A1

**In der Beschreibung aufgeführte Nicht-Patentliteratur**

- Spatially adaptive subsampling of image sequences. **BELFOR et al.** IEEE TRANSACTIONS ON IMAGE PROCESSING. IEEE SERVICE CENTER, 01. September 1994, vol. 3, 492-500
- **SULLIVAN et al.** Overview of the High Efficiency Video Coding (HEVC) Standard. *IEEE TRANSACTIONS ON CIRCUITS AND SYSTEMS FOR VIDEO TECHNOLOGY,* 01. Dezember 2012, vol. 22 (12), ISSN 1051-8215, 1649-1668
- SSPQ - spatial domain perceptual image codec based on subsampling and perceptual quantization. **WANG et al.** IMAGE PROCESSING (ICIP), 2012 19TH IEEE INTERNATIONAL CONFERENCE ON IMAGE PROCESSING. IEEE, 30. September 2012, 1061-1064
- A perceptually tuned subband image coder based on the measure of just-noticeable-distortion profile. **CHUN-HSIEN CHOU et al.** IEEE TRANSACTIONS ON CIRCUITS AND SYSTEMS FOR VIDEO TECHNOLOGY. IEEE SERVICE CENTER, 01. Dezember 1995, vol. 5, 467-476
- **C.-H. CHOU ; Y.-C. LI.** A perceptually tuned subband image coder based on the measure of just-noticeable-distortion profile. *IEEE Trans. Circuits Syst. Video Technol.,* Dezember 1995, vol. 5 (6), 467-476
- **X. YANG ; W. LIN ; Z. LU ; E. ONG ; S. YAO.** Just-noticeable-distortion profile with nonlinear additivity model for perceptual masking in color images. *Acoustics, Speech, and Signal Processing, 2003. Proceedings. (ICASSP '03). 2003 IEEE International Conference on,* April 2003, vol. 3, III-609-12
- **A. LIU ; W. LIN ; M. PAUL ; C. DENG ; F. ZHANG.** Just noticeable difference for images with decomposition model for separating edge and textured regions. *IEEE Trans. Circuits Syst. Video Technol.,* November 2010, vol. 20 (11), 1648-1652
- *JPEG-LS, publiziert als ISO-Standard und ITU-T-Empfehlung: ISO/IEC 14495-1:1999 ITU-T Rec. T.87,* Juni 1998
- **VON M. J. WEINBERGER ; G. SEROUSSI ; G. SAPIRO.** The LOCO-I lossless image compression algorithm: principles and standardization into JPEG-LS. *IEEE Transactions on Image Processing,* August 2000, vol. 9 (8), 1309-1324
- **VON X. WU ; N. MEMON.** Context-based, adaptive, lossless image coding. *IEEE Transactions on Communications,* April 1997, vol. 45 (4), 437-444
- **VON P. G. HOWARD ; J. S. VITTER.** Fast and efficient lossless image compression. *Data Compression Conference,* 1993, 351-360